# EUROPEAN PATENT SPECIFICATION

(11) **EP 1 884 441 B1**
(45) Date of publication and mention of the grant of the patent: **18.09.2013**
(21) Application number: 05736638.7
(22) Date of filing: 27.04.2005
(51) Int. Cl.: B62D 1/06, B60K 20/02, B68F 1/00, D06N 3/00

(54) **LEATHER AND PROCESS FOR PRODUCING LEATHER**
LEDER UND VERFAHREN ZUR HERSTELLUNG VON LEDER
CUIR ET PROCEDE DESTINE A LA PRODUCTION DE CUIR

(43) Date of publication of application: 06.02.2008
(73) Proprietor: Midori Anzen Co., Ltd., Tokyo 150-8455 (JP)
(72) Inventor: ARIMA, Takashi C/o MIDORI ANZEN CO., LTD., 150-0012 TOKYO (JP); KOBAYASHI, Seiichi C/o MIDORI ANZEN CO., LTD., 150-0012 Tokyo (JP); SUZUKI, Tomoyuki C/o MIDORI ANZEN CO., LTD., 150-0012 TOKYO (JP)
(74) Representative: Grünecker, Kinkeldey, Stockmair & Schwanhäusser
(86) International application number: PCT/JP2005/007997
(87) International publication number: WO 2006/117842

(56) References cited:
- DE-C1- 19 614 352
- JP-A- 2004 026 084
- JP-U- 5 089 152
- JP-U- 7 042 736
- JP-U- 06 033 774
- JP-Y1- 45 010 236
- US-A1- 2004 035 241
- FUKUNO R.: 'Bessatsu CG Kuruma wa Kakushite Tsukurareru' NIGENSHA 28 April 2001, page 27, XP003005255

## Description

### TECHNICAL FIELD

The present invention relates to a leather, and more particularly to one in which a folded portion is formed at an edge section.

### BACKGROUND ART

Related prior art is disclosed in DE 196 14 352 C1, JP 05 089152 U, JP 07 042736 U, US2004/035241 A1 and JP 06 033774 U.

As closest prior art the DE 196 14 352 C1 is seen, which also discloses a leather including at least two or more reference parts, wherein further a leather cover and a method for manufacturing same leather is disclosed. The reference parts overlay each other at least partially and are fixed to each other. The leather can be further designed according to the preamble of claim 1.

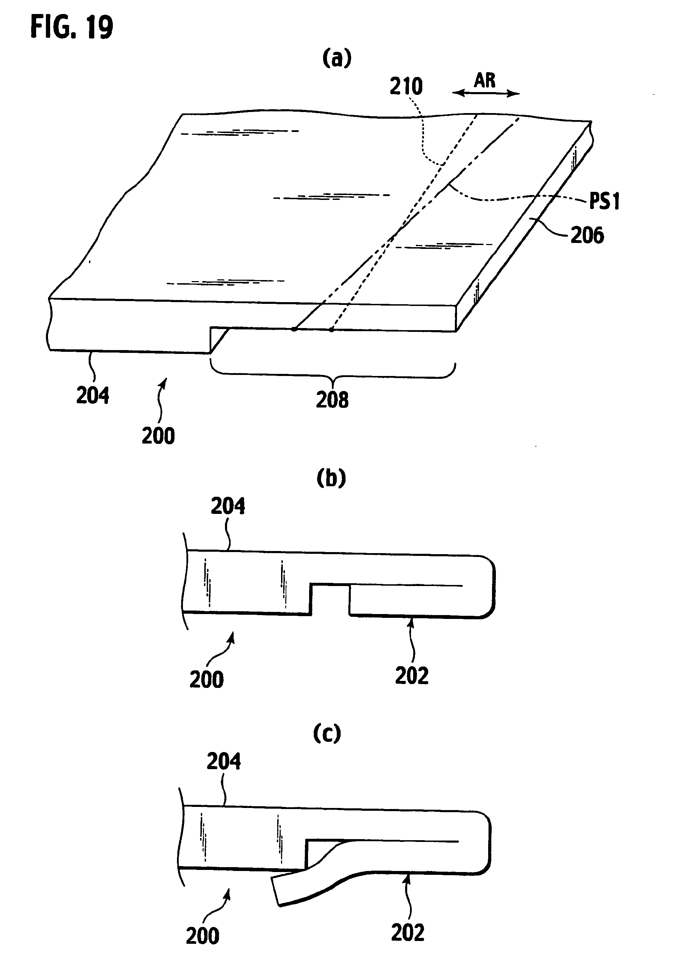

Fig. 19 is a perspective view showing a schematic configuration of a conventional leather 200.

The conventional leather 200 is used for covering a steering wheel, for example, and has a folded portion 202. This folded portion 202 is formed by forming a thin flesh portion 208 of a prescribed width on a side of an edge 206 of a leather material 204, sewing this thin flesh portion 208 with stitches (not shown), and folding and adhering the thin flesh portion 208 at a section (folding line) 210 of a constant distance (a half of a width of the thin flesh portion 208, for example) from the edge 206 (see Japanese Patent Application Laid Open No. H6-64546, for example).

Then, the leather 200 with the folded portion 202 formed thereon is adhered to a core member of the steering wheel to cover a surface of the core member of the steering wheel, so as to improve the feel and an outward appearance of the steering wheel.

Now, in the leather 200, it is difficult to fold the natural or artificial leather material 204 with thickness and some degrees of rigidity and elasticity accurately along the folding line 210, and there are cases where the actually folded portion is displaced in a direction of an arrow AR or displaced obliquely as shown by two dotted chain line PS1.

Namely, in the conventional leather 200, there has been a problem that there are cases where the folded portion 202 cannot be formed in an accurate shape.

The folding at a constant width is relatively easy when the leather material is in a square shape as shown in Fig. 19 and the edge 206 is in a straight line shape as shown in Fig. 19, but in the case where the core member is a solid in a complicated three-dimensional shape as in the case of the steering wheel, this solid is composed by a combination of complicated curves and curved surfaces so that it is inevitably necessary to make the leather material to cover these curved surfaces into curved surfaces at a time of attaching.

For this reason, it is rare to have the edge 206 of the leather material 204 in a straight line shape at a time of developing on a plane (at a time of cutting) and it is more likely composed by complicated curves, so that it is extremely difficult to fold the edge 206 of the leather material 204 composed by complicated curves at a uniform width (constant width) over the entire circumference, and the above described problem such as having the folding Position displaced obliquely as shown by a two dotted chain line PS1 will occur.

When the folding width of the leather material 204 which was measured and cut in the first place on an assumption of later being folded uniformly is displaced, an outer shape size of the leather (after the edge is folded) 200 to be adhered will be largely different from a designed value depending on sections. Also, the core member which is a separate component is formed as a manufactured article of a certain size separately from the leather 200, so that with the leather 200 different from the designed value as described above, defects will occur at portions for matching edge sections of the leather 200 to be wound around and adhered together.

When the amount of folding (the folding width) is smaller than the designed value as a result of having the folded portion displaced in this way, the folded Portion 202 will be formed in a state where the thin flesh portion 208 is exposed as shown in Fig. 19 (b), and the portions for matching will overlap at a time of matching and adhering edge sections together.

Also, when the amount of folding is larger than the designed value, the folded portion 202 will be formed in a state where the folded portion is protruded as shown in Fig. 19 (c), and a state in which edge sections cannot be matched (reached) together will occur.

In this way, when the folded portion 202 is formed in an inaccurate shape, the shape of the entire leather 200 becomes inaccurate, and when it is adhered to the core member of the steering wheel, the appearance of the steering wheel will be spoiled as there is a gap between leathers or the leathers overlap, and the feel is also deteriorated as an unnecessary hooking portion is formed so that a fingertip will be hooked. The steering wheel having these Problems will be a component for a car or the like to be described below, and as it has Problems at portions to be directly touched by hand of a driver, it will be an obstacle at a time of driving a car safely so that it will not be a commercial product.

Note that the problems described above are problems not only for the steering wheel but also for the leather to be used on a shift knob or the leather without the sewing with stitches that can occur similarly.

The present invention has been achieved in view of the above described problems, and has an object to provide a leather in which a shape of a folded portion provided at an edge section is accurate, and a manufacturing method of that leather, in a leather for covering a shift knob or a steering wheel.

### DISCLOSURE OF THE INVENTION

The invention according to the first aspect of the present invention is, a method for treating a leather according to claim 1 comprising amongst others: forming a thin flesh portion by removing a portion on a back side of the leathermaterial in a prescribed width and a prescribed depth along the edge of the leather material; and forming a folded portion such that back sides of the leather material are set in contact with each other by folding the leather at a boundary between the thin flesh portion and a portion of the leather material at which the thin flesh portion is not formed.

The invention according to the second aspect of the present invention is, the method for treating a leather of claim 1, wherein a face of the thin flesh portion which is in the folded portion, corresponding to a front side of the leather material, is removed in a prescribed depth.

The invention according to the third aspect of the present invention is, a shift knob or the steering wheel according to claim 3 comprising amongst others: a core member; a first leather of claim 1 or claim 2; and a second leather of claim 1 or claim 2, wherein a end of the folded portion of the first leather and a end of the folded portion of the second leather are set in contact with each other, a back side of the first leather is positioned on the front side of the core member, the first leather covers a part of the front side of the core member, a back side of the second leather is positioned on the front side of the core member, and the second leather covers a part of the front side of the core member.

The invention according to the fourth aspect of the present invention is, the shift knob or the steering wheel of claim 3, wherein the folded portion is adhered using pressure-sensitive adhesive, the each leather is adhered the core member using adhesive.

### BRIEF DESCRIPTION OF THE DRAWINGS

[FIG. 1] Fig. 1 is a figure showing a schematic configuration of a shift knob according to the first embodiment of the present invention.
[FIG. 2] Fig. 2 is a figure showing a state in which the shift knob is decomposed.
[FIG. 3] Fig. 3 is a figure showing a form of a leather.
[Fig. 4] Fig. 4 is a figure showing a forming process and a configuration of a folded portion.
[Fig. 5] Fig. 5 is a figure showing a forming process and a configuration of a folded portion.
[FIG. 6] Fig. 6 is a figure showing a VIA-VIB cross section in Fig. 1.
[FIG. 7] Fig. 7 is a figure showing a method at a time of measuring an adhering strength of a folding of the leather.
[FIG. 8] Fig. 8 is a figure showing a strength test result when the folded portion of the leather is adhered to a core member by adhesives.
[FIG. 9] Fig. 9 is a figure showing a modified example of a small rigidity portion and a modified example of a thin flesh portion.
[FIG. 10] Fig. 10 is a figure showing a modified example of a smal rigidity portion.
[FIG. 11] Fig. 11 is a figure showing a modified example of the shift knob.
[FIG. 12] Fig. 12 is a figure showing a XIA-XIB cross section in Fig. 11.
[FIG. 13] Fig. 13 is a figure showing a schematic configuration of a steering wheel according to the second embodiment of the present invention.
[FIG. 14] Fig. 14 is a figure in which the steering wheel is viewed from a back side.
[FIG. 15] Fig. 15 is a figure showing a modified example of the steering wheel.
[FIG. 16] Fig. 16 is a figure showing a modified example of the steering wheel.
[FIG. 17] Fig. 17 is a figure showing a XVIIA-XVIIB cross section in Fig. 15.
[FIG. 18] Fig. 18 is a cross sectional view corresponding to a XVIIA-XVIIB cross section in Fig. 15.
[FIG. 19] Fig. 19 is a perspective view showing a schematic configuration of a conventional leather.

### BEST MODE FOR CARRYING OUT THE INVENTION

### [FIRST EMBODIMENT]

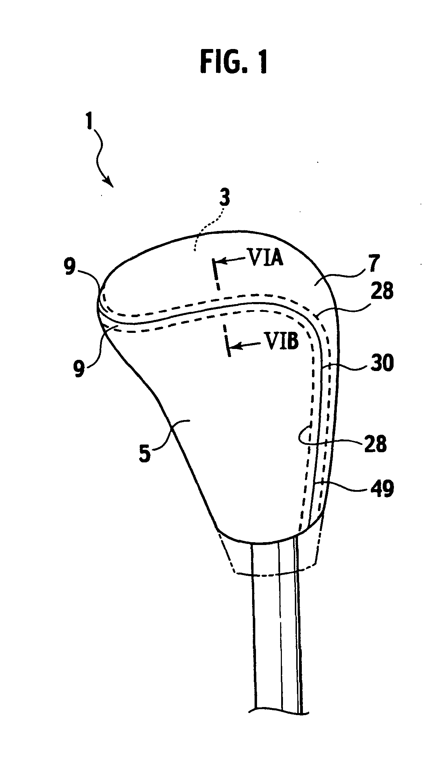

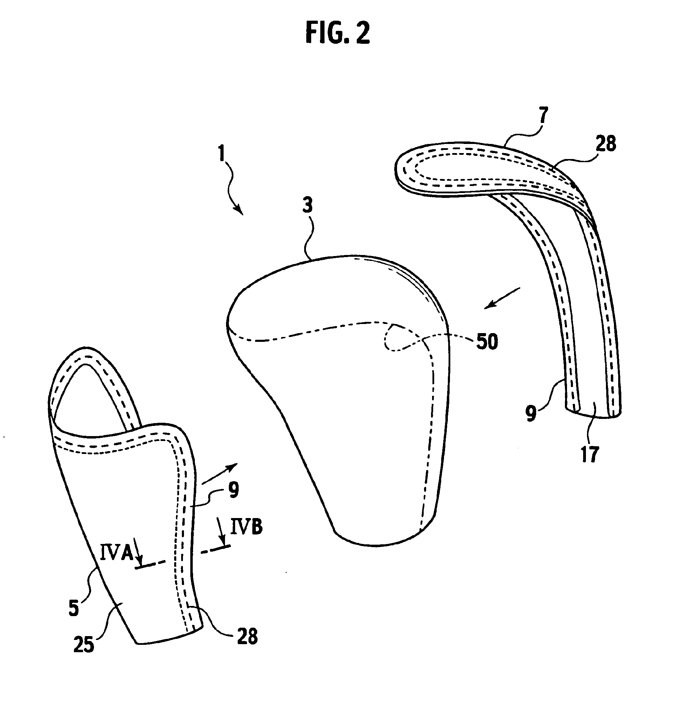

Fig. 1 is a figure showing a schematic configuration of a shift knob 1 according to the first embodiment of the present invention, and Fig. 2 is a figure showing a state in which the shift knob 1 is decomposed.

The shift knob 1 is to be used by being attached to a tip end portion of a change lever of a gearbox of a car or a tip end portion of an operation lever of a parking brake of a car, for example, and has a core member (body) 3 which constitutes a main body part, while the core member 3 is covered by a leather 5 and a leather 7. Note that the core member 3 is formed by the known technique. Namely, the core member 3 is integrally formed by a core metal and urethane resin by covering a core metal by a resin such as urethane resin.

To explain it in further detail, the core member 3 is covered by the leathers 5 and 7 as the back sides of the leathers 5 and 7 (faces on a side of a core member 3 and a side of a reticular layer to be described below of each of the leathers 5 and 7) are adhered to the core member 3 by adhesives (bond) in a state where edges of the leathers 5 and 7 are matched (set in contact) together.

Here, the leather 5 will be described in detail. The leather 7 is configured similarly as the leather 5, so that the leather 5 will be described here and the description of the leather 7 will be omitted.

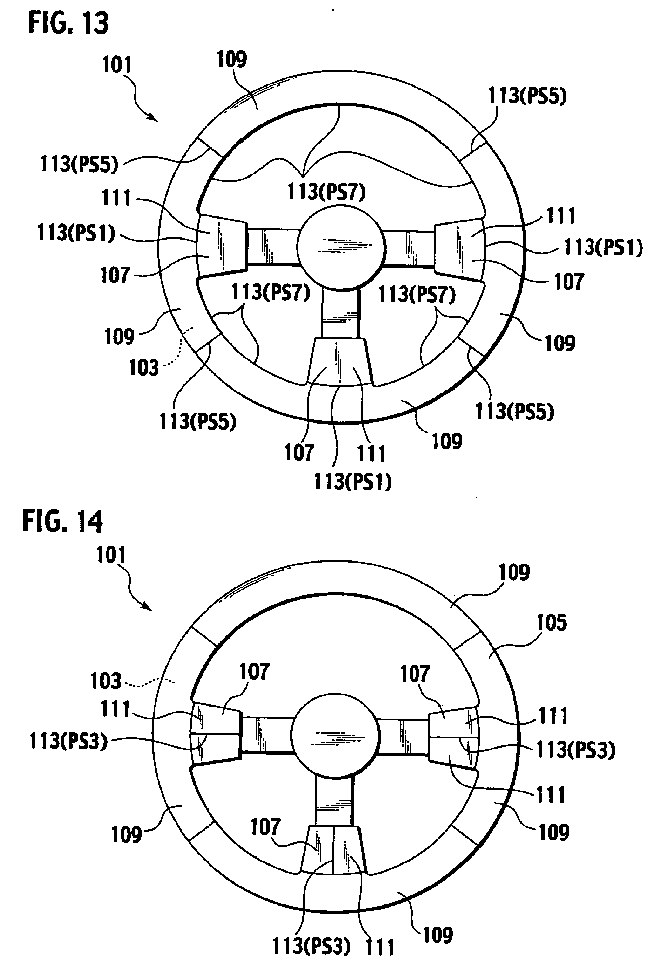

The leather 5 is a so called natural leather, which is formed in a sheet shape, which has a coating film (coating film layer) on its surface, and which is for covering the core member 3 of the shift knob as described above or for covering a core member (see Fig. 13) 103 of a steering wheel to be described below. Note that the leather to be used in the present invention is not limited only to the natural leather, and it goes without saying that it may be an artificial leather which is artificially formed in a sheet shape and the coating film described above is provided on its surface.

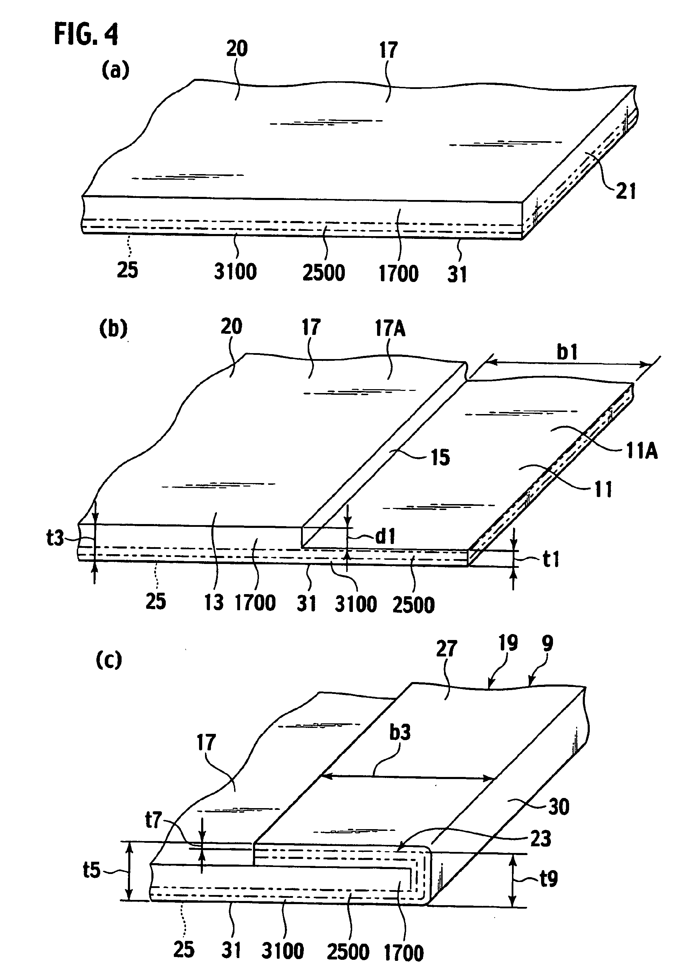

Also, as is well known, the natural leather to be used in the present invention is a true skin of an animal, and when its cross section is observed, there are a grain layer 2500 and a reticular layer 1700 looking from an outer skin side that is removed by the tanning process or the like, where a coating film layer 3100 described above is formed on an outer skin face (outer skin side) of the grain layer for the purpose of water-proofing, stain-proofing and glazed-finishing (see Fig. 4 (a)). In general, the grain layer 2500 has a tendency of being hard as mechanical properties such as a strength is high, and the reticular layer 1700 in which thick fibers are loosely arranged with each other three-dimensionally has a tendency of being soft as a strength or the like is relatively lower than the grain layer 2500.

At an edge section of the leather 5, a folded portion 9 is formed.

Here, the folded portion 9 will be described.

Fig. 4 is a figure showing a forming process and a configuration of the folded portion 9, and Fig. 4(c) is a figure showing a IVA-IVB cross section in Fig. 2.

The folded port ion 9 (see Fig. 4 (c)) is formed by folding the leather material 20 such that the thin flesh portion 11 and a back side 17 of the leather material 20 are set in contact with each other, at a boundary (step) 15 (see Fig. 4 (b)) between the thin flesh portion 11 and a portion 13 of the leather material 20 at which the thin flesh portion 11 is not formed, and adhering (gummedly adhering) them by pressure-sensitive adhesives (sticker). Also, the folded portion 9 is formed at an edge section 19 of the leather 5.

The thin flesh portion 11 is formed (see Fig. 4(b)) in a band shape by removing a portion on the back side 17 of the leather material 20 in a prescribed depth d1 and a prescribed width b1 along an edge 21 of the leather material 20 (a leather before the folded portion 9 is formed; (see Fig. 4(a)).

Also, a thickness t1 of the thin flesh portion 11 is set to be a thickness of about 1/5 to 1/2 (preferably a thickness of nearly 1/2) of a thickness t3 of the portion 13 in the leather material 20, and the width b1 of the thin flesh portion 11 is set to be a width of about three to ten times (preferably a width of five to six times) of the thickness t3.

Consequently, a thickness t5 of the folded portion 9 is nearly equal to a sum of the thickness t1 of the thin flesh portion 11 and the thickness t3 of the portion 13 of the leather material 20, and a width b3 of the folded portion 9 is slightly less than the width b1 of the thin flesh portion 11 (see Fig. 4(c)).

Also, a part of the folded portion 9 of the leather 5 is removed by a drag portion 23. Namely, a front face side (grain layer side) of a reversed portion 27 which is positioned on the back side 17 of the leather material 20 from a front face 25 side (grain layer side described above) of the leather material 20 as a result of forming the folded portion 9 is removed only for a prescribed thickness t7 by the drag portion 23 in a band shape.

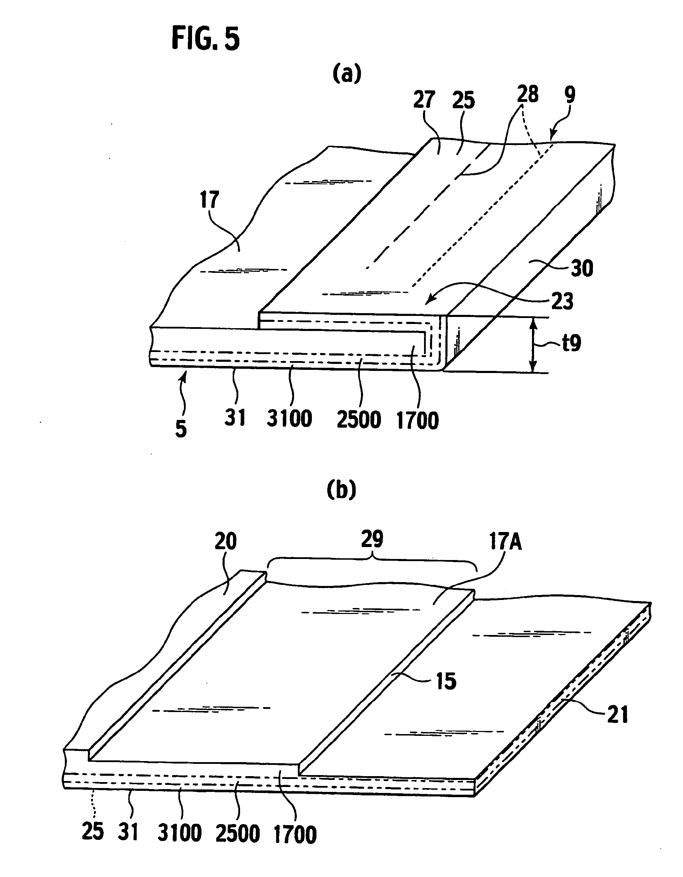

The thickness t7 that is removed is set to be thinner than the thickness t1 of the thin flesh portion 11 (about a half of the thickness t1, for example), and it is also preferable to set the thickness t9 of the folded portion 9 to be slightly thicker than the thickness t3 of the portion 13 of the leather material 20 as a result of forming the drag portion 23 (see Fig. 5(a)).

More preferably, only the coating film layer 3100 which functions to lower the adhesiveness is removed by avoid removing the grain layer 2500 on the front side as much as possible. In this way, the grain layer 2500 for which the property such as the adhering strength (bond strength) is relatively high will be adhered directly to the core member 3 through the adhesives, so that adhering faces of the edge sections that are matched together will be fixed firmly to the core member 3, and it becomes possible to provide a manufactured product with a high durability in the case of using it in a manufactured product of a steering wheel or a shift knob.

Also, in the case of the above described embodiment, the reversed portion 27 on which the drag portion 23 is formed by the drag processing will be formed in an already nearly flat shape in a state of being folded, so that there is an additional effect that the coating film can be removed without unevenness over the entire drag processing portion as the drag portion 23 is drag processed at a uniform thickness.

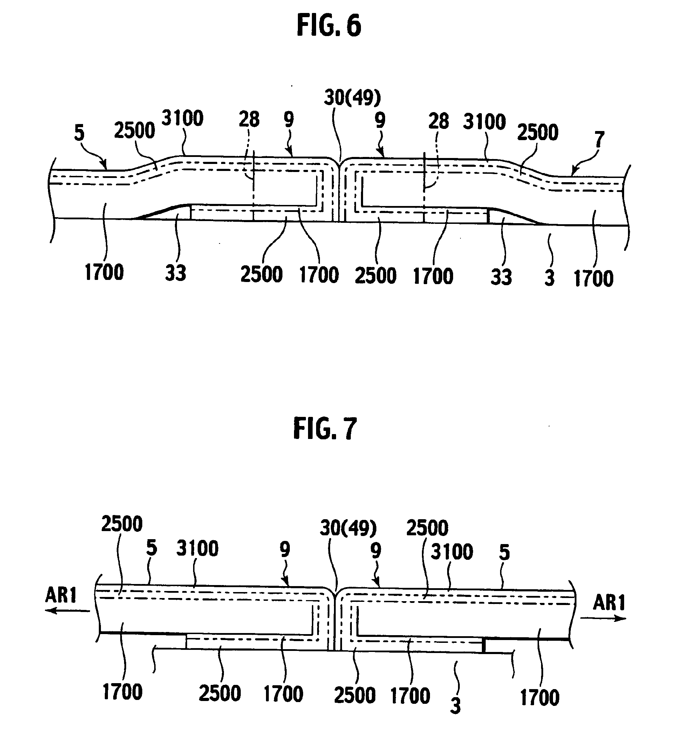

In addition, there are cases where stitches 28 for stitching up portions of the leather material 20 that constitute the folded portion 9 are provided at the folded portion 9 (see Fig. 5 (a) and Fig. 6). The stitches 28 are provided along an edge 30 of the folded portion 9.

By providing the stitches 28 in this way, it is possible to firmly fix the portion that is folded and the portion set in contact with this portion that is folded, that is, to make the folded portion 9 firm. In the case where the twisting or peeling force is applied to the folded portion 9 on which the stitches 28 are provided, the peeling off of the leather 5 from the core member 3 due to the peeling that starts from a portion at which the leather material of the folded portion 9 is folded and adhered can be prevented.

Next, the process for forming the folded portion 9 will be described.

First, the sheet like leather material 20 in an appropriate shape on which the folded portion 9 is not formed as shown in Fig. 4 (a) is prepared. Note that, in the case where the surface of the core member 3 is a curved surface, it is preferable to prepare the leather material 20 in a curved surface shape corresponding to that curved surface.

Next, the band shaped thin flesh portion 11 is formed by removing a portion on the back side 17 of the leather material 20 in a prescribed depth d1 and a prescribed width b1 along the edge 21 of the leather material 20 (see Fig. 4(b)).

Next, the pressure-sensitive adhesives are applied to a back side 11A of the thin flesh portion 11 and a back side portion 17A which is a portion on the back side 17 of the leather material 20 at which the thin flesh portion 11 is not formed and which is adjacent to the thin flesh portion 11 and in a nearly same width as the back side 11A of the thin flesh portion 11.

In this case, the pressure-sensitive adhesives with the pressure-sensitive adhesiveness for which a time for hardening is relatively long such as adhesives of gum type (rubber type) for example will be used as the pressure-sensitive adhesives. By using this method, when the reversed portion 27 is folded and adhered, it is possible to make a correction even if the folding width is displaced, by utilizing the property that they will not be hardened soon, and the pressure-sensitive adhesives will be hardened before the leathers 5 and 7 are adhered to the core member 3, so that the folded portion 9 at a time of adhering the leathers 5 and 7 to the core member 3 can be formed firmly and the matching and adhering portion of the folded portion 9 can be formed more firmly.

Next, the folded portion 9 is formed by folding the leather material 20 such that back side portion 17A of the leather material 20 and the back side 11A of the thin flesh portion 11 are set in contact with each other (such that the back sides to which the pressure-sensitive adhesives are applied will be adhered together through the pressure-sensitive adhesives), at a boundary 15 between the thin flesh portion 11 and the portion 13 of the leather material 20 at which the thin flesh portion 11 is not formed (see Fig. 4 (c)).

Note that, in Fig. 4 and Fig. 5, it is described as an embodiment in which the edge 21 of the leather material 20 is in a straight line shape in order to explain the basic content of the present invention, but in practice it will become an edge formed by a plurality of curves as described above. The folding at a constant width is relatively easy when the edge is in a straight line shape, but in the case of the leather 5 to be adhered to a portion of the core member 3 which is a three-dimensional solid composed by complicated curved surfaces as in the case of the steering wheel or the shift knob, the shape of the leather material 20 also becomes complicated.

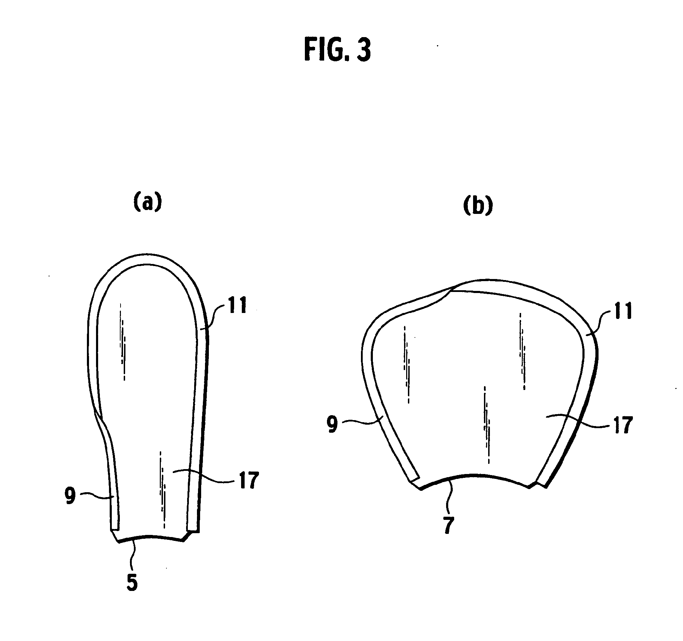

To fold the edge 21 of the leather material 20 at a constant width in such a way has been difficult in the prior art (see Fig. 3), and when the folding position is displaced, a gap is formed at the matching portions of the leather 5 and the leather 7 that are adhered to the core member 3 or the leather 5 and the leather 7 overlap so that it will not be a commercial product. However, according to the leather 5, the folding is carried out at a place of the step 15 so that it is made easy to fold the edge section at a constant width.

Note that, in the case of providing the stitches 28 without providing the dragportion 23 as described above, the stitches 28 will be provided after the folded portion 9 is formed.

On the other hand, in the case of providing the stitches 28 and the drag portion 23 as described above, he drag portion 23 is provided after the folded portion 9 is formed by folding, and then the stitches 28 will be provided after that.

Also, as shown in Fig. 5(b), it is also possible to form the folded portion by removing the back side portion 17A by which the thin flesh portion 11 is to be folded and set in contact only for a slight thickness by providing a drag portion 29, and setting the thin flesh portion 11 in contact with the portion removed by this drag portion 29. By removing the back side portion 17A of the leather material 20 by the drag portion 29, it becomes easy to make the thickness of the folded portion 9 thinner and set the thickness of the leather at the portion at which the folded portion 9 is not formed and the thickness of the leather at the portion at which the folded portion 9 is formed to be nearly the same thickness.

Note that, as described above, when the folded portion 9 is formed by folding the leather material 20, a thin covering film 31 (coating film layer 3100) formed on the front face 25 will also be formed on the reversed portion 27 which is positioned on the back side 17 of the leather 5, but when the drag portion 23 is provided as described above, the covering film 31 of the folded and reversed portion 27 of the folded portion 9 will be removed, and in addition, there are case where a part of the grain layer 2500 to be described below will also be removed.

Here, it is described in repetition that, in general, the front face 25 of the leather 5 is a face on the grain side, and the back side 17 of the leather 5 is a face on the flesh side.

The grain and the flesh side will be described. When an oxhide is considered as the leather, for example, the grain is a face corresponding to an outer skin face (a face covered by hairs) of an ox, and the flesh side is a face on a side of the flesh of an ox. Also, the fiber components constituting the leather are dense on the grain side and coarse on the flesh side. Consequently, the mechanical strength such as tensile strength or the like is high on the grain side, and the mechanical strength is low at the flesh side.

Note that a layer in which the fiber components are dense on the grain side is referred to as the grain layer 2500, and a layer in which the fiber components are thin on the flesh side is referred to as the reticular layer 1700 described above.

The core member 3 is covered by the leathers 5 and 7 formed as described above (see Fig. 1 and Fig. 2). In this covering, as shown in Fig. 6 (a VIA-VIB cross section in Fig. 1), the back sides 17 (including the reversed portion 27) of the leathers 5 and 7 are adhered to the core member 3 in a state in which edges (edges of the folded portions 9) 30 of the leathers 5 and 7 are matched (set in contact) together.

Note that, as shown in Fig. 6, in a state where the leathers 5 and 7 are adhered to the core member 3, the thickness t5 (the thickness t9 in the case where the drag portion 23 is provided; see Fig. 4(c)) of the leather 5 at the portion at which the folded portion 9 is provided is slightly thicker than the thickness t3 of the leather 5 at the portion at which the folded portion 9 is not provided, so that a slight gap 33 will be formed between the portion at which the folded portion 9 is provided and the portion at which the folded portion 9 is not provided.

Consequently, even if the pressure-sensitive adhesives that are applied in order to form the folded portion 9 are leaked slightly, the leaked pressure-sensitive adhesives will be stopped at the gap 33, so that it is possible to prevent the back sides 17 of the leathers 5 and 7 from being adhered to the core member 3 in a state where the leaked pressure-sensitive adhesives are mixed with adhesives for adhering the leather 5 to the core member 3, and it is possible to prevent the lowering of the adhering strength of the leathers 5 and 7.

Here, the strength test result when the folded portion 9 of the leather 5 is adhered to the core member 3 by adhesives will be described.

The test was conducted by adhering the leathers 5, 5 having the folded portion 9 with the drag portion (a drag portion provided at the reversed portion 27) 23 provided thereon to the core member 3 by adhesives as shown in Fig. 7 (a figure showing a method at a time of measuring an adhering strength of the folded portion 9 of the leather 5), and applying the tension load in a direction of an arrow AR1. Consequently, in a state shown in Fig. 7, a shearing force will be caused at adhering faces of the folded portion 9 and the core member 3.

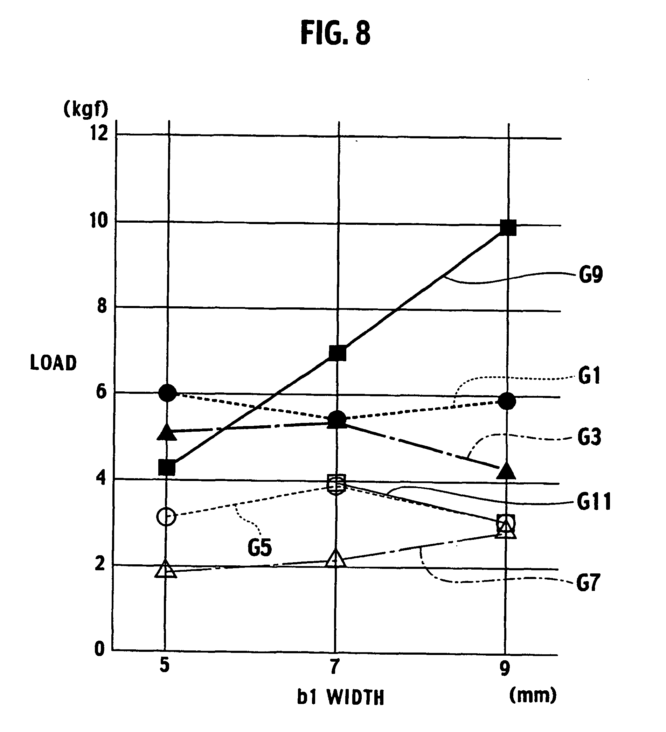

Fig. 8 is a figure showing the strength test result when the folded portion 9 of the leather 5 is adhered to the core member 3 by adhesives.

A vertical axis of Fig. 8 indicates a load when the leather 5 gets separated from the core member 3 as the folded portion 9 or the adhering portion is peeled off or the like. Note that a unit [kgf] of the vertical axis of Fig. 8 implies kilogram weight, where 1 kgf corresponds to 9.8 N(Newton).

A horizontal axis of Fig. 8 indicates the width b1 of the thin flesh portion 11 provided at a time of forming the folded portion 9, and a unit is [mm].

Also, a thickness of the leather 5 at the portion at which the folded portion 9 is not formed (a thickness of the leather material 20) shown in Fig. 7 is 1. 3 mm, and the leather 5 has a width of 15 mm in a direction perpendicular to a plane of a paper of Fig. 7.

A graph G1 shown in Fig. 8 indicates the adhering strength of the leather in which the folded portion 9 is formed wi th the thickness t1 of the thin flesh portion 11 set to 0. 9 mm, a graph G3 indicates the adhering strength of the leather in which the folded portion 9 is formed with the thickness of the thin flesh portion 11 set to 0.7 mm, a graph G5 indicates the adhering strength of the leather in which the folded portion 9 is formed with the thickness of the thin flesh portion 11 set to 0. 5 mm, and a graph G7 indicates the adhering strength of the leather in which the folded portion 9 is formed with the thickness of the thin flesh portion 11 set to 0. 3 mm. Note that the stitches are not provided on the folded portions 9 for obtaining the results of graphs G1, G3, G5 and G7.

A graph G9 indicates the adhering strength of the leather in which the folded portion 9 is formed with the thickness t1 of the thin flesh portion 11 set to 0.7 mm and the stitches 28 provided in addition. A graph G11. indicates the adhering strength of a conventional leather 200.

As can be understood from the result of Fig. 8, except for the graph G9, the change is small between the adhering strength in the case where the width b1 of the thin flesh portion is 7 mm and the adhering strength in the case where the width b1 is 9 mm. The reason for this is that the adhering area between the core member 3 and the folded portion 9 is increased when the width b1 of the thin flesh portion 11 is widened, but the strength in a vicinity of a location (boundary 15) of the folding at a time of forming the folded portion 9 by folding the thin flesh portion 11 is not increased, and a vicinity of a location of the folding is torn off in the strength test.

The graph G9 is the test result for the leather in which the stitches 28 are provided, so that the tearing off does not occur as the thin flesh portion 11 and the back side 17 are joined. Therefore, the adhering strength becomes greater as the width b1 of the thin flesh portion 11 becomes wider.

Note that, if the width b1 of the thin flesh portion 11 is made too wide, it would become difficult to release wrinkles produced at a time of folding, or the adhesives at the portion at which the leather material of the folded portion is folded and adhered would be hardened. If the thickness t1 of the thin flesh portion 11 is made too thick, it would become difficult to fold accurately as there would be no abrupt change in thickness of the leather material, or a difference in thickness between the folded portion and the leather material (a thickness at a location where the folded portion is not formed) would become large so that the outward appearance and the feel at a time of adhering the leather 5 to the core member 3 would be deteriorated. In addition, the strength of about 5 kgf is sufficient as the adhering strength, so that it is considered practical when the thickness of the thin flesh portion 11 is about 0.7 mm and the width b1 is about 7 mm, as shown in the graph G3 or the graph G9.

According to the leather 5, he thickness of the leather material 20 is abruptly changed at a place of the boundary 15 between the thin flesh portion 11 and the portion of the leather material 20 at which the thin flesh portion 11 is not formed, so that the leather material 20 is easy to bend at a place of the boundary 15, and therefore the leather material 20 can be folded accurately at a place of the boundary 15, so that the folded portion 9 in an accurate shape can be formed at an edge section of the leather 5.

Then, when the folded portion 9 is formed in an accurate shape, the shape of the entire leather 5 becomes accurate, and when it is adhered to the core member 3, it is possible to prevent a formation of a gap between the leathers 5 and 7, and it is also possible to prevent the leathers 5 and 7 from overlapping, so that it becomes possible to make the outward appearance and the feel of the shift knob 1 good.

Note that, apart from a shape such as that of the boundary 15, it is also possible to provide a portion at which the thickness of the leather material is abruptly changing, instead of the boundary 15.

In addition, instead of the boundary 15, it is also possible to form a small rigidity portion in a line shape at which the flexural rigidity is smaller compared with the other portions of the leather material 20, along the edge 21 of the leather material 20, and form the folded portion 9 at an edge section of the leather 5 by folding the leather material 20 such that the back sides of the leather material 20 are set in contact with each other at this small rigidity portion, and adhering them by pressure-sensitive adhesives. In this case it is not absolutely necessary to provide the thin flesh portion as described above.

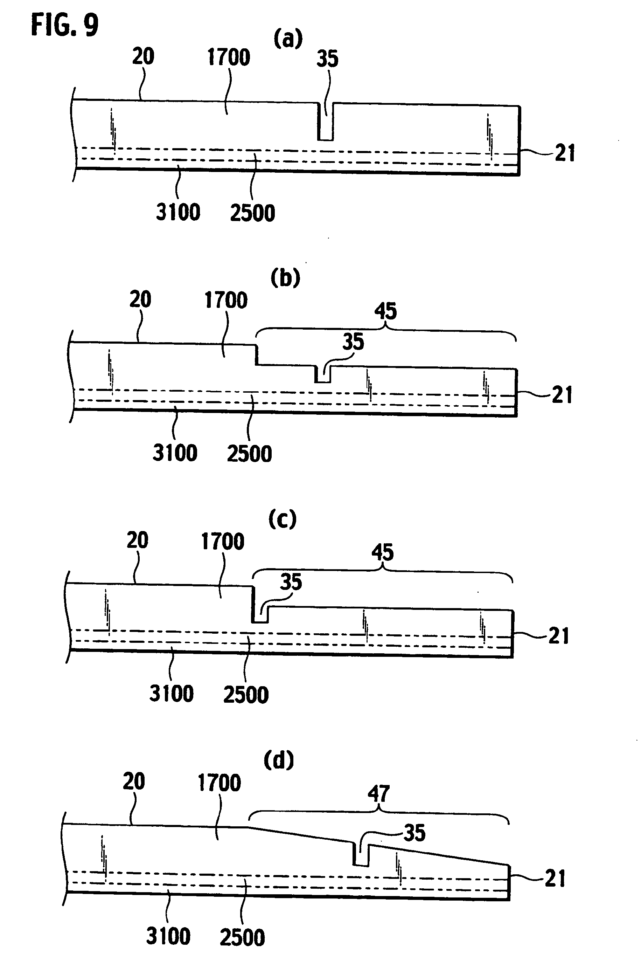

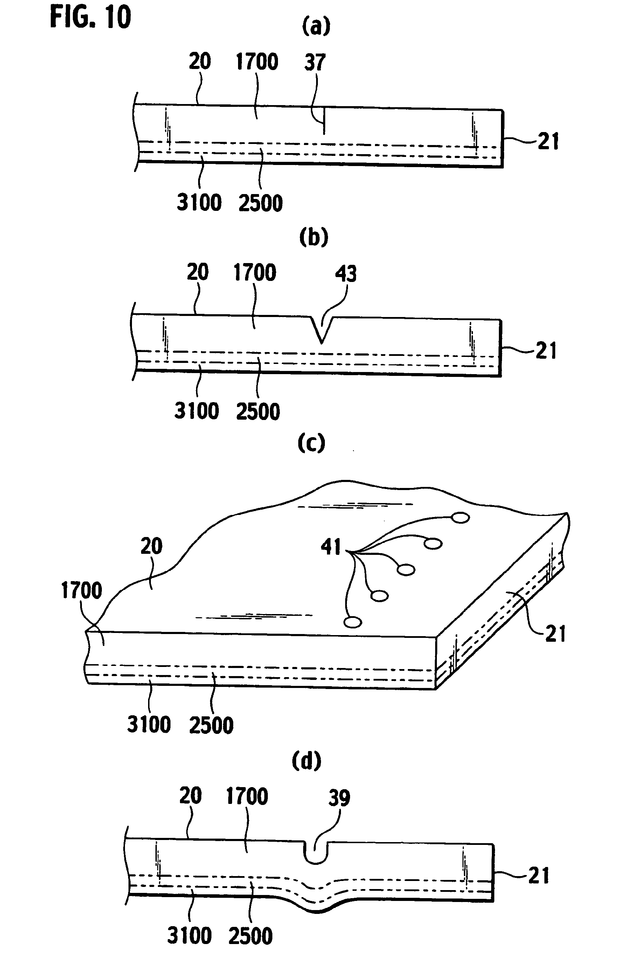

As the small rigidity portion, it is possible to adopt a portion at which the thickness of the leather material 20 is abruptly changing, such as a groove 35 (see Fig. 9(a)) formed along the edge 21 of the leather material 20, a slit 37 (see Fig. 10(a)) formed along the edge 21 of the leather material 20, a deformed portion 39 (see Fig. 10(d)) formed by a press (a thermal press, for example) formed along the edge 21 of the leather material 20, etc. Also, as the small rigidity portion, it is possible to adopt multiple holes formed at prescribed intervals along the edge 21 of the leather material 20 (holes extended in a direction of the thickness of the leather material 20, which are holes 41 that are piercing through the leather material 20 or holes that are not piercing through the leather material 20 and ending in a middle; see Fig. 10(c)). In addition, the holes 41 may be formed in slit shapes, and also threads may be placed through the holes 41 to produce a decorative effect, for example.

Also, the groove 35 shown in Fig. 9(a) is formed in a rectangular cross sectional shape, but it is possible to adopt a groove in other shape such as a groove 43 with a V-shaped cross sectional shape as shown in Fig. 10(b) and the like.

Then, by forming the folded portion 9 by forming the small rigidity portion at which the rigidity is smaller compared with the other portions along the edge and folding the leather material 20 at this small rigidity portion, it is possible to form the folded portion 9 in an accurate shape, similarly as in the case of changing the thickness of the leather material 20 abruptly as described above.

Now, the folded portion may be formed by forming the groove 35 while providing the thin flesh portion and folding the thin flesh portion at the groove 35.

For example, as shown in Fig. 9 (b), the groove 35 may be provided at a middle section in a width direction of the thin flesh portion 45, or as shown in Fig. 9(c), the groove 35 may be provided at a boundary between the thin flesh portion 45 and a portion of the leather material at which the thin flesh portion 45 is not formed.

Also, as shown in Fig. 9(d), the thin flesh portion 47 may be formed such that it has a shape that becomes thinner towards the edge of the leather material (a cross section is trapezoidal, for example).

In addition, the thin flesh portion as described above may be provided even in the case of providing the small rigidity portion such as the slit 37 as shown in Fig. 10(a), the groove 43 as shown in Fig. 10(b), the multiple holes 41 as shown in Fig. 10(c), and the deformed portion 39 as shown in Fig. 10(d), etc.

According to the leather 5, the folded portion 9 is provided at the edge section, while the thickness t9 of the folded portion 9 is only slightly thicker than the thickness t3 of the portion at which the folded portion is not formed (a no folded portion formed portion), so that when the shift knob 1 or the steering wheel to be described below is covered by using the leather 5, it is possible to make a form of a matching portion 49 of the leathers in a good state, similarly as in the case of applying a pre-arrangement, without providing a groove on the core member 3 of the shift knob 1 (see Fig. 1 and Fig. 6).

In other words, as the folded portion 9 is provided at the edge section, the edge faces (cutting faces) of the leather materials are not exposed at the matching portion 49 of the leathers 5 and 7, so that the outward appearance of the shift knob 1 becomes good, while the thickness t9 of the folded portion 9 is slightly thicker than the thickness t3 of the no folded portion formed portion, so that the leathers 5 and 7 are hardly protruded (not pushed out) in a direct ion away from the core member 3 at the matching portion 49 of the edges 30 of the leathers 5 and 7, so that it is possible to prevent the hooking of a hand during the driving.

Also, there is no need to provide a deep groove on the core member 3 of the shift knob 1 for the purpose of the pre-arrangement, so that it is possible to simplify a shape of the core member 3.

Consequently, in the case of manufacturing the core member 3 by the molding, it is possible to avoid making a metal mold complicated and reduce a manufacturing cost of a metal mold, and also it becomes easy to avoid causing an undercut on the core member 3, so that a degree of freedom in designing the core member 3 (shift knob 1) is increased.

In addition, no groove is provided on the core member 3, so that it is possible to provide coverings with different leather arrangement patterns even for the core member in a single shape.

Also, in the case of covering the core member 3 of the shift knob 1 by the leather, there is no need to make the pre-arrangement and it suffices to simply match the edges of the leathers and adhere the leathers, so that it is possible to reduce the number of working steps at a time of covering the core member 3 by the leathers.

In addition, according to the leather 5, the coating (covering film) 31 is removed as the drag portion 23 is provided at the reversed portion 27, so that the adhering strength of the leathers with respect to the core member 3 of the shift knob 1 or the steering wheel to be described below is increased.

Consequently, as a face of the folded portion 9 from which the coating 31 is removed is adhered to the core member 3, the adhering strength of the leathers with respect to the core member 3 can be increased, so that it is possible to prevent the peeling off of the leathers (the peeling off of the leathers from the core member 3 especially due to the change in time) at the matching portion 49 of the leathers and its vicinity, and it is possible to prevent a situation where the core member 3 is exposed as the matching portion 49 is opened up.

Also, according to the leather 5, the leather 5 is adhered to the core member 3 with the grain with a high mechanical strength facing outside, so that it is possible to prevent scars or the like on the leather 5 as much as possible, while the coating is applied on a face with a high mechanical strength, so that the strength of the coating is also increased.

Also, according to the leather 5, the stitches 28 are provided on the folded portion 9, so that it is possible to produce a high grade appearance and improve the feel.

Here, the shift knob 1 will be described further.

On a surface of the core member 3 of the shift knob 1. as shown in Fig. 2, a marking 50 is formed for the purpose of positioning the leathers 5 and 7 (the edges of the leathers 5 and 7).

The marking 50 is formed by providing a shallow groove or a low protrusion on a surface of the core member 3, or by a line formed by painting ink, for example.

By forming the marking 50 in this way, it becomes easy for an operator to recognize a relative positional relationship between the core member 3 and the leathers 5 and 7 at a time of adhering the leathers 5 and 7 to the core member 3.

Note that, in the shift knob 1, the core member 3 is covered by two leathers 5 and 7, but it is possible to change a shape of each leather or cover the core member 3 by one leather or three or more plural leathers. By dividing the leathers to be adhered to the core member 3 into plural pieces, it is possible to make a shape of each leather simple without affecting the degree of freedom in designing the shift knob (especially a design of leathers), so that it is possible to increase the yield of the leathers.

Also, it is possible to color the leathers mutually differently by changing the color of the coating, for example, or by changing the color of the leather itself, for example, and it is also possible to make a surface state (a coarseness or a friction coefficient, for example) of a front face of each leather different, by using the embossing processing, napping, buckskin, etc.

By changing the color or the surface state in this way, it is possible to improve the beauty (increase the design quality) of the shift knob.

Also, it is possible to provide a no leather arranged portion which is a portion not covered by the leather at which a material other than the leather such as wood, plastic, metal or the like is exposed, at a part of the surface of the shift knob.

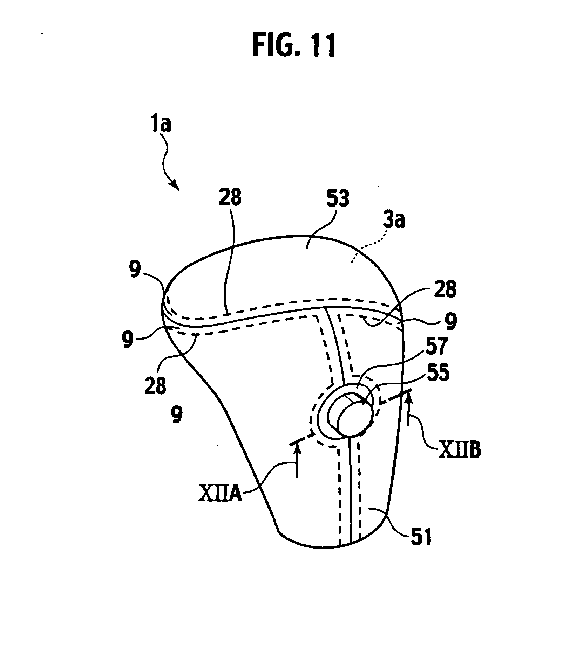

For example, in a shift knob 1a shown in Fig. 11 (a figure showing a modified example of a shift knob), a side face of a core member 3a is covered by a leather 51, and an upper face of the core member 3a is covered by a leather 53, but an operation button arrangement portion 57 on which an operation button 55 is arranged may be provided at a part of a surface of the shift knob 1a. No leather is provided at a location where the operation button arrangement portion 57is provided.

By providing a no leather arranged portion which is a portion not covered by the leather at which a material other than the leather such as wood, plastic, metal or the like is exposed, it is possible to improve the beauty (increase the design quality) of the shift knob, similarly as in the case of making the color or the surface state of each leather different.

Also, by providing the operation button arrangement portion 57 on which the operation button 55 is arranged at apart of a surface of the shift knob, it is possible to provide a shift knob which has a good operation performance for a driver.

Here, the arrangement state of the leathers around the operation button arrangement portion 57 will be described.

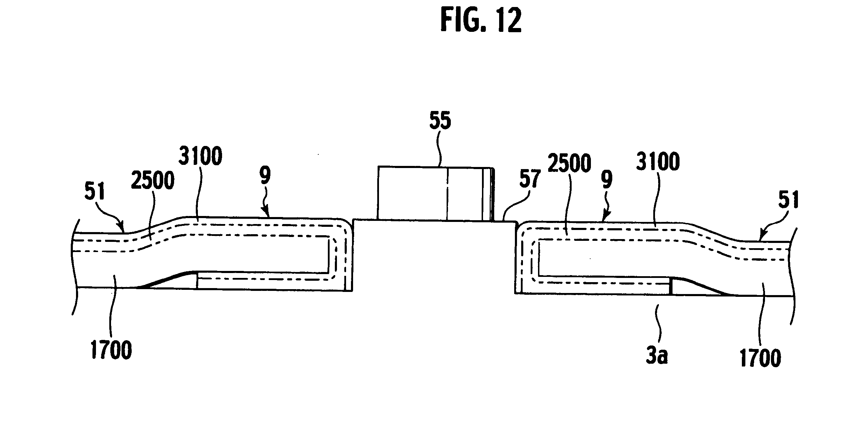

Fig. 12 is a figure showing a XIIA-XIIB cross section in Fig. 11.

At a boundary between the operation button arrangement portion 57 and the leather 51 on the shift knob 1a, the back side of the leather 51 is adhered to the core member 3a of the shift knob 1a in a state where the edge of the folded portion 9 formed at an edge section of the leather 51 is placed close to an end of the operation button arrangement portion (no leather arranged portion) 57.

Note that, in the case of providing the no leather arranged portion, the leather is also provided at a boundary between this no leather arranged portion and the leather, in a form similar to that of a boundary between the operation button arrangement portion 57 and the leather 51

By arranging the leathers in this way, it becomes possible to make the outward appearance of the shift knob good at a boundary between the no leather arranged port ion or the operation button arrangement portion on the shift knob and the leather.

### [SECOND EMBODIMENT]

Fig. 13 is a figure showing a schematic configuration of a steering wheel 101 according to the second embodiment of the present invention. Note that Fig. 13 is a figure in which the steering wheel 101 arranged in a car is viewed from a side of a driver.

Fig. 14 is a figure in which the steering wheel 101 is viewed from a back side (a side opposite to a driver).

The steering wheel 101 according to the second embodiment is covered by using the leather similar to the leather that covers the shift knob 1 according to the first embodiment, and has almost the same effects as the shift knob 1 according to the first embodiment.

To explain it in detail, the steering wheel 101 has a ring portion 105 and a spoke portion107, while a main body part of the steering wheel 101 is constituted by a core member (body) 103.

Then, the core member 103 is covered by adhering a plurality of leathers (leathers which are separated from each other in a state before an arrangement on the core member 103) 109 and 101 which have shapes different from those of the leathers 5 and 7 according to the first embodiment but have their edge sections configured similarly (have the folded portions similar to the folded portion 9). Note that the leathers 109 are covering the ring portion 105, and the leathers 111 are covering the spoke portion 107.

Matching portions 113 at which edges of the leathers 109 and 111 are matched are formed similarly as the matching portion 49 of the leathers 5 and 7 of the shift knob 1 according to the first embodiment (see Fig. 6).

Note that the matching portions 113 are formed as a seam (seam between the leather 109 and the leather 111) PS1 between the ring portion 105 and the spoke portion 107 of the steering wheel 101, a seam PS3 of the leather 111 which is extending in a radius direction or a direction intersecting with a radius direction of the steering wheel 101 on a back side of the spoke portion 107, a seam PS5 of the leathers 109 formed at a dividing posit ion when the ring port ion 105 is dividedinto plural sections, and a seam 107 at the edge of the leather 109.

Note that, for portions at which the matching portions are formed, it is not absolutely necessary to have all these portions. For example, it is possible to cover the ring portion 105 by one leather and delete the seams PS5.

Now, by providing the matching portions 113 at the seams PS1 between the ring portion 105 and the spoke portion 107 of the steering wheel 101, it is possible to make a shape of the leathers to cover the core member 103 of the steering wheel 101 simple, so that the yield of the leathers is increased.

Note that, on a surface of the core member 103, a marking for positioning the leathers may be formed similarly as in the case of the shift knob 1, and it is also preferable to have the coating on a side that is folded in the folded portion of the leather removed.

In addi t ion, similarly as in the case of the shift knob 1, the leathers 109 and 111 may be colored differently, or the surface states of the front faces of the leathers 109 and 111 may be made differently.

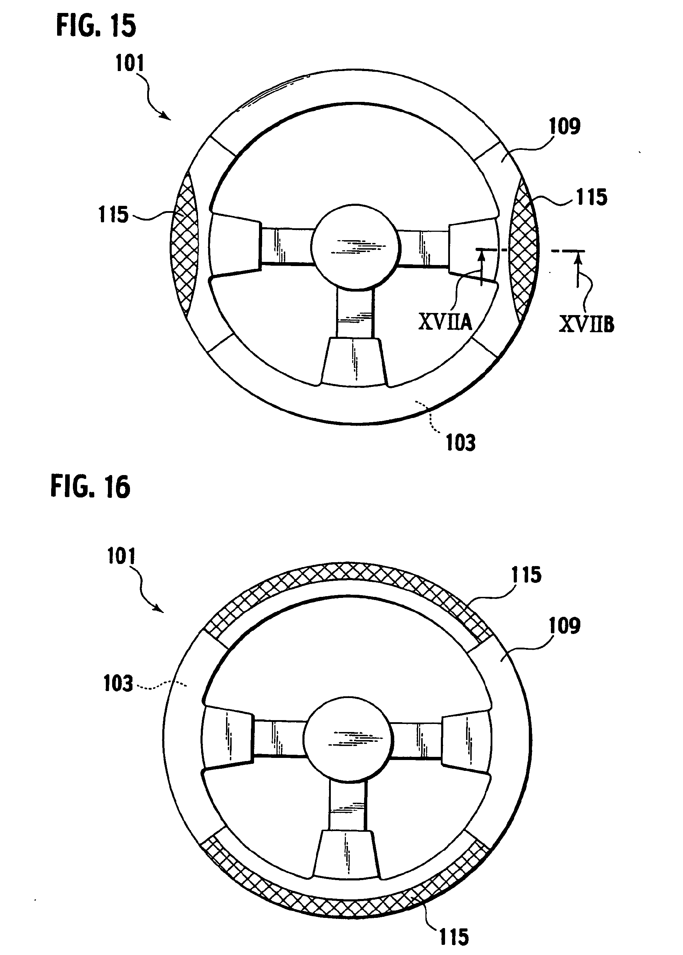

Also, as shown in Fig. 15 (a figure showing a modified example of the steering wheel), a no leather arranged portion 105 which is a portion not covered by the leather at which a material other than the leather such as wood, plastic, metal or the like is exposed, may be provided at a part of the surface of the ring portion 105. Note that an arrangement form of the no leather arranged portion may be appropriately changed as shown in Fig. 16.

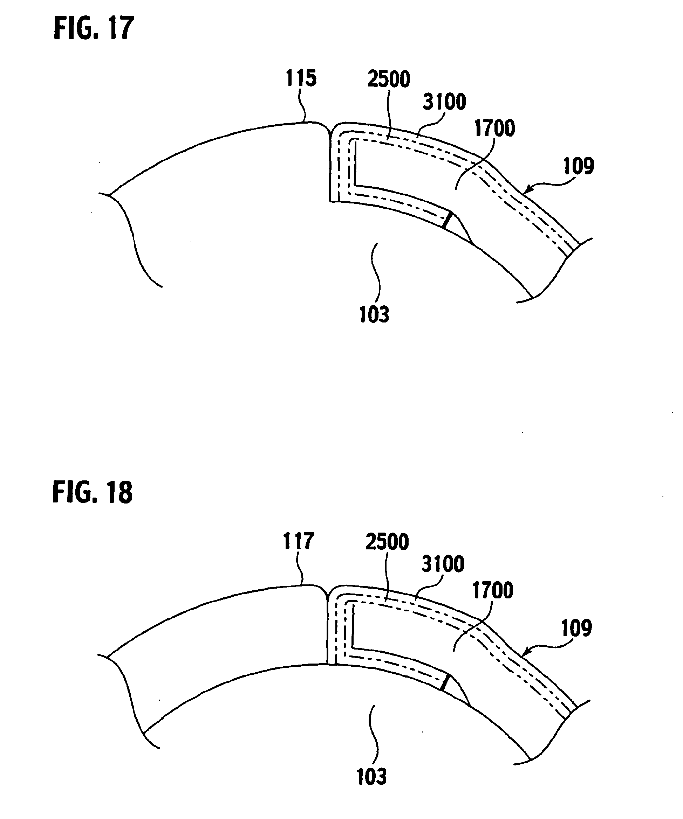

Also, at a boundary between the no leather arranged portion 115 and the leather 109 on the steering wheel 101, as shown in Fig. 17 (a XVIIA-XVIIB cross section in Fig. 15), a back side of the leather 109 is adhered to the core member 103 in a state where the edge of the folded portion formed at an edge section of the leather 109 is placed close to an end of the no leather arranged portion 115.

Note that, at the no leather arranged portion 105, the core member 103 is extended and there is hardly no step between a surface of this extended portion and a surface of the leather 109, but as shown in Fig. 18 (a cross sectional view corresponding to a XVIIA-XVIIB cross section in Fig. 15), another member 117 may be attached without extending the core member 103.

## Claims

1. A method for treating a leather (5, 7; 109, 111) for covering a shift knob or a steering wheel comprising:
providing a leather material (5, 7; 109, 111) with a front side (25) and a back side (17) a covering film (31) being formed on said front side;
forming a thin flesh portion (11) by removing a portion on the back side (17) of the leather material (5, 7; 109, 111) in a prescribed width and a prescribed depth along the edge of the leather (5, 7; 109, 111), wherein the thin flesh portion (11) has a thickness smaller than a thickness of a portion (13) of the leather material (5, 7; 109, 111) at which the thin flesh portion (11) is not formed; **characterized in that** the method further comprises:
forming a folded portion (9) such that back sides (11a, 17a) on the same side of a single leather material (5, 7; 109, 111) are set in contact with each other by folding the leather at a boundary between the thin flesh portion (11) and the portion (13) of the leather material(5, 7; 109, 111) at which the thin flesh portion (11) is not formed, to form a reversed portion (27), wherein the covering film (31) of the folded and reversed portion (27) of the folded portion (9) is removed.

2. The method of claim 1, wherein a face of the thin flesh portion (11) which is folded in the folded portion (9), corresponding to the front side of the ieather (5, 7; 109, 111), is removed in a prescribed depth.

3. A shift knob (1, 1a) or a steering wheel(101) comprising:
a core member (3, 3a; 103);
a first leather produced according to the method of claim 1 or claim 2; and
a second leather produced in accordance with the method of claim 1 or 2,
wherein an end of the folded portion (9) of the first leather and an end of the folded portion of the second leather are set in contact with each other,
a back side (11a) of the first leather is positioned on the front side of the core member (3, 3a; 103),
the first leather covers a part of the front side of the core member (3, 3a; 103),
a back side (17a) of the first leather is positioned on the front side of the core member, and
the second leather covers a part of the front side of the core member (3, 3a; 103).

4. The shift knob or the steering wheel of claim 3, wherein the folded portion (9) is adhered using pressure-sensitive adhesive, the each leather is adhered the core member (3, 3a; 103) using adhesive.

## Patentansprüche

1. Verfahren zum Behandeln eines Leders (5, 7; 109, 111), mit dem ein Schaltknauf oder ein Lenkrad bezogen wird, wobei es umfasst:
Bereitstellen eines Ledermaterials (5, 7; 109, 111) mit einer Vorderseite (25) und einer Rückseite (17), wobei eine Überzugschicht (31) an der Vorderseite ausgebildet ist;
Ausbilden eines Abschnitts (11) mit geringer Materialstärke durch Entfernen eines Abschnitts an der Rückseite (17) des Ledermaterials (5, 7; 109, 111) in einer vorgegebenen Breite und einer vorgegebenen Tiefe entlang des Randes des Leders (5, 7; 109, 111), wobei der Abschnitt (11) mit geringer Materialstärke eine Dicke hat, die kleiner ist als eine Dicke eines Abschnitts (13) des Ledermaterials (5, 7; 109, 111), an dem der Abschnitt (11) mit geringer Materialstärke nicht ausgebildet ist, **dadurch gekennzeichnet, dass** das Verfahren des Weiteren umfasst:
Ausbilden eines gefalteten Abschnitts (9), so dass Rückseiten (11a, 17a) an der gleichen Seite eines einzelnen Ledermaterials (5, 7; 109, 111) in Kontakt miteinander gebracht werden, indem das Leder an einer Grenze zwischen dem Abschnitt (11) mit geringer Materialstärke und dem Abschnitt (13) des Ledermaterials (5, 7; 109, 111), an dem der Abschnitt (11) mit geringer Materialstärke nicht ausgebildet ist, gefaltet wird, um einen umgekehrten Abschnitt (27) auszubilden, wobei die Überzugschicht (31) des gefalteten und umgekehrten Abschnitts (27) des gefalteten Abschnitts (9) entfernt wird.

2. Verfahren nach Anspruch 1, wobei eine Fläche des Abschnitts (11) mit geringer Materialstärke, der in den gefalteten Abschnitt (9) gefaltet wird, die der Vorderseite des Leders (5, 7; 109, 111) entspricht, in einer vorgegebenen Tiefe entfernt wird.

3. Schaltknauf (1, 1a) oder Lenkrad (101), der/das umfasst:
ein Kernelement (3, 3a; 103);
ein erstes Leder, das gemäß dem Verfahren nach Anspruch 1 oder Anspruch 2 hergestellt wird; und
ein zweites Leder, das gemäß dem Verfahren nach Anspruch 1 oder 2 hergestellt wird,
wobei ein Ende des gefalteten Abschnitts (9) des ersten Leders und ein Ende des gefalteten Abschnitts des zweiten Leders in Kontakt miteinander angeordnet sind,
sich eine Rückseite (11a) des ersten Leders an der Vorderseite des Kernelementes (3, 3a; 103) befindet,
das erste Leder einen Teil der Vorderseite des Kernelementes (3, 3a; 103) abdeckt,
sich eine Rückseite (17a) des ersten Leders an der Vorderseite des Kernelementes befindet, und
das zweite Leder einen Teil der Vorderseite des Kernelementes (3, 3a; 103) abdeckt.

4. Schaltknauf oder Lenkrad nach Anspruch 3, wobei der gefaltete Abschnitt (9) mit druckempfindlichem Klebstoff angeklebt ist und jedes Leder mit Klebstoff an dem Kernelement (3, 3a; 103) angeklebt ist.

## Revendications

1. Procédé de traitement de cuir (5, 7; 109, 111) destiné à couvrir un pommeau de changement de vitesse ou un volant comprenant :
la fourniture d'un matériau en cuir (5, 7; 109, 111) avec une face avant (25) et une face arrière (17), un film de recouvrement (31) étant formé sur ladite face avant ;
la formation d'une partie de chair mince (11) en enlevant une partie de la face arrière (17) du matériau en cuir (5, 7; 109, 111) sur une largeur prescrite et une profondeur prescrite le long du bord du cuir (5, 7; 109, 111), dans lequel la partie de chair mince (11) possède une épaisseur plus petite que l'épaisseur de la partie (13) du matériau en cuir (5, 7; 109, 111) dans laquelle n'est pas formée la partie de chair mince ; **caractérisé en ce que** le procédé comprend en outre :
la formation d'une partie repliée (9), de telle sorte que les faces arrière (11a, 17a) du même côté d'une matière de cuir unique (5, 7; 109, 111) sont mises en contact entre elles en repliant le cuir à la limite entre la partie de chair mince (11) et la partie (13) de la matière en cuir (5, 7; 109, 111) dans laquelle n'est pas formée la partie de chair mince (11), afin de former une partie inversée (27), dans laquelle le film de recouvrement (31) de la partie repliée et inversée (27) de la partie repliée (9) est enlevé.

2. Procédé selon la revendication 1, dans lequel une face de la partie de chair mince (11) qui est repliée dans la partie repliée (9), correspondant à la face avant du cuir (5, 7; 109, 111), est enlevée sur une longueur prescrite.

3. Pommeau de changement de vitesse (1, 1a) ou volant (101) comprenant :
un élément de coeur (3, 3a; 103) ;
un premier cuir produit selon le procédé de la revendication 1 ou de la revendication 2 ; et
un second cuir produit selon le procédé de la revendication 1 ou 2,
dans lequel une extrémité de la partie repliée (9) du premier cuir et une extrémité de la partie repliée du second cuir sont mises en contact entre elles,
la face arrière (11a) du premier cuir est positionnée sur la face avant de l'élément de coeur (3, 3a; 103),
le premier cuir couvre une partie de la face avant de l'élément de coeur (3, 3a; 103),
la face arrière (17a) du premier cuir est positionnée sur la face avant de l'élément de coeur, et
le second cuir couvre une partie de la face avant de l'élément de coeur (3, 3a; 103).

4. Pommeau de changement de vitesse ou volant selon la revendication 3, dans lequel la partie repliée (9) est collée en utilisant une colle sensible à la pression, chaque cuir est collé à l'élément de coeur (3, 3a; 103) en utilisant de la colle.
